# EUROPÄISCHE PATENTSCHRIFT

(11) **EP 3 885 627 B1**
(45) Veröffentlichungstag und Bekanntmachung des Hinweises auf die Patenterteilung: **01.11.2023**
(21) Anmeldenummer: 21164228.5
(22) Anmeldetag: 23.03.2021
(51) Int. Cl.: F16L 33/08

(54) **SCHLAUCHSCHELLE**
HOSE CLIP
COLLIER DE SERRAGE

(30) Priorität: 27.03.2020 DE 102020204049
(43) Veröffentlichungstag der Anmeldung: 29.09.2021
(73) Patentinhaber: ContiTech Techno-Chemie GmbH, 61184 Karben (DE)
(72) Erfinder: Flach, Axel, 30419 Hannover (DE); Klose, Julian, 30419 Hannover (DE)
(74) Vertreter: Continental Corporation

(56) Entgegenhaltungen:
- US-A- 4 453 289
- US-A1- 2003 159 255
- US-A1- 2007 035 122

## Beschreibung

Die Erfindung betrifft eine Schlauchschelle mit einer Vorrichtung zur Positionierung der Schlauchschelle auf einem Schlauch, wobei die Schlauchschelle mindestens ein Schellenband aufweist, welches um eine gedachte Längsachse radial beabstandet tangential etwa kreisringförmig herumgewunden ist und eine Spannvorrichtung aufweist.

Derartige Schlauchschellen dienen der Verklemmung von Schläuchen auf Anschlussstutzen und sind in großer Vielfalt bekannt und im Einsatz. Sie finden beispielsweise auch im Automobilbau bei Kühlmittelschläuchen Verwendung.

Um die Montage der Kühlmittelschläuche zu vereinfachen, ist es vorteilhaft, die Schlauchschelle auf dem Schlauchende bereits vor der Montage der Schläuche auf den Schlauchenden zu positionieren und zu fixieren, damit der Werker die Schläuche fertig konfektioniert zum Einbau anwenden kann. Dazu sind verschiedene Positionierhilfen bekannt.

In der DE 10 2006 048 344 A1 ist eine Positioniereinrichtung der gattungsgemäßen Art offenbart, bei der Krallen der Positioniereinrichtung in ihrem Verlauf nach dem orthogonalen Abwinkeln einen weiteren Knick mit stumpfem Winkel aufweisen. Auf diese Weise sind die Krallen beim Eindringen in eine Schlauchwand aufeinander zu ablenkbar, sodass sich nach Abschluss des Eindringens ein heftklammerartiger Zustand der Krallen einstellt.

Damit eine derartige Verkrallung entsteht, ist jedoch ein plastisch verformbarer Werkstoff erforderlich, der gegebenenfalls durch eine Zugbelastung auch wieder entformbar ist. Dadurch, dass die Oberflächen der Krallen relativ glatt sein müssen, damit das aufeinander zu Bewegen der Krallen ungestört vonstattengehen kann, ist so die Gefahr gegeben, dass die Verkrallung beim unvorsichtigen Entnehmen beispielsweise aus Transportbehältern wieder gelöst wird.

In der EP 2 250 420 B1 ist eine Schellenanordnung mit Positionierhilfe offenbart, die der Anordnung aus der DE 10 2006 048 344 A1 sehr ähnlich ist, jedoch auf die zusätzliche Abwinklung der Krallen verzichtet. Hier kann zwar ein hochfester, wenig oder schwer plastisch verformbarer Werkstoff zum Einsatz kommen, da aber die Krallen nach dem Eindringen in eine Schlauchwand keinen Formschluss aufweisen, sondern die Haltekräfte bei Zugbelastung ausschließlich auf der Reibung zwischen Kralle und Schlauchwand beruhen, ist auch hier die Gefahr gegeben, dass sich die Schelle beim Entnehmen beispielsweise aus Transportbehältern zu leicht löst.

Die US 2003159255 A1 betrifft eine mehrteilige Positionierungsvorrichtung, bei der ein Schellenband zunächst in einer C-förmigen Halterung sowohl axial als auch drehfest festgelegt werden muss. Die Halterung kann anschließend an einem Schlauch über Klammern oder Nieten festgelegt werden. Die US 4453289 A zeigt als Alternative zu einem vollumfänglichen Schellenband eine nur einen kleinen Teil des Schlauchumfangs umgreifende Schlauchklemme, die an einen Schlauch mithilfe von Klammern oder Nieten befestigt wird.

Der Erfindung lag die Aufgabe zugrunde, die Haltekräfte einer gattungsgemäßen Vorrichtung zu verbessern.

Diese Aufgabe wird dadurch gelöst, dass die Vorrichtung mindestens ein axial zum Schellenband abragendes, flächiges Halteelement aufweist und die Vorrichtung weiter mindestens einen Befestigungsstift aufweist, der durch das flächige Halteelement radial nach innen ragt, wobei der Befestigungsstift durch die Wand eines Schlauches hindurch stechbar ist und wobei an dem Befestigungsstift in radialer Richtung außen von dem Halteelement und innenseitig des Schlauches jeweils ein Nietkopf ausbildbar ist.

Eine derartige Vorrichtung erlaubt eine feste Anbringung von Schlauchschellen am Ende des Schlauches. Dadurch, dass die Verbindung nietartig ausgebildet ist, ist ein unbeabsichtigtes Lösen der Befestigung sehr erschwert.

In einer Weiterbildung der Erfindung ist das Halteelement aus einem dünnen Metallblech ausgebildet, wobei das Halteelement in seinem vom Schellenband abragenden Teil eine Bohrung aufweist.

Halteelemente aus Metallblech sind beispielsweise durch Durchsetzfügen oder Schweißen einfach befestigbar. Sie weisen eine hohe Festigkeit auf.

In einer Weiterbildung der Erfindung ist das Halteelement aus einem Kunststoff ausgebildet.

Kunststoffe ermöglichen bei guter Festigkeit das Durchstechen des Befestigungsstifts durch das Halteelement ohne eine separate Bohrung. Der Befestigungsstift erzeugt beim Durchstechen die notwendige Öffnung im Halteelement selbst.

In einer Weiterbildung der Erfindung ist der Befestigungsstift aus einem weichen Metall ausgebildet.

In einer Weiterbildung der Erfindung ist der Befestigungsstift aus Aluminium ausgebildet.

Weiche Metalle wie Aluminium lassen sich leicht plastisch verformen, sodass die Ausbildung von Nietköpfen einfach möglich ist.

In einer Weiterbildung der Erfindung ist der Befestigungsstift aus einem thermoplastischen Kunststoff ausgebildet.

Thermoplastische Kunststoffe ermöglichen eine besonders einfache Ausbildung der Nietköpfe.

In einer Weiterbildung der Erfindung weist der Befestigungsstift bereits vor dem Durchstechen der Schlauchwand in radialer Richtung außen einen Nietkopf auf.

Bei dieser Anordnung ist die Positionierung des Befestigungsstifts weiter vereinfacht, weil durch den bereits vor dem Einstechen vorhandenen Nietkopf der Befestigungsstift quasi einen Anschlag aufweist, der ein zu weites Einstechen in die Schlauchwand verhindert.

Anhand der Zeichnungen wird nachstehend ein Ausführungsbeispiel der Erfindung näher erläutert. Es zeigt
Fig. 1 einen Querschnitt einer auf ein Schlauchende aufgesteckten Schlauchschelle vor der Befestigung,
Fig. 2 eine Draufsicht auf die Anordnung einer Haltezunge an der Schlauchschelle und
Fig. 3 eine Ausschnittvergrößerung der Schlauchschelle mit Positioniervorrichtung in befestigtem Zustand.

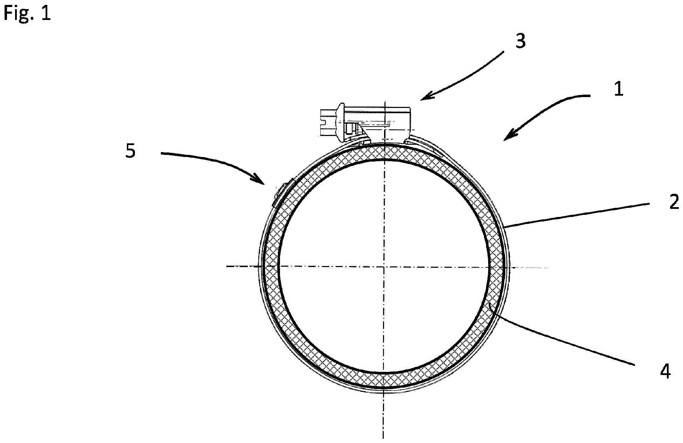

Die Fig. 1 zeigt einen Querschnitt einer Schlauchschelle 1, die ein Schellenband 2 und eine Spannvorrichtung 3 aufweist. Die Schlauchschelle 1 ist auf einen Elastomerschlauch 4 aufgeschoben. An dem Schellenband 2 ist ein Halteelement 5 angeordnet, das als flache Zunge axial von dem Schellenband 2 abragt.

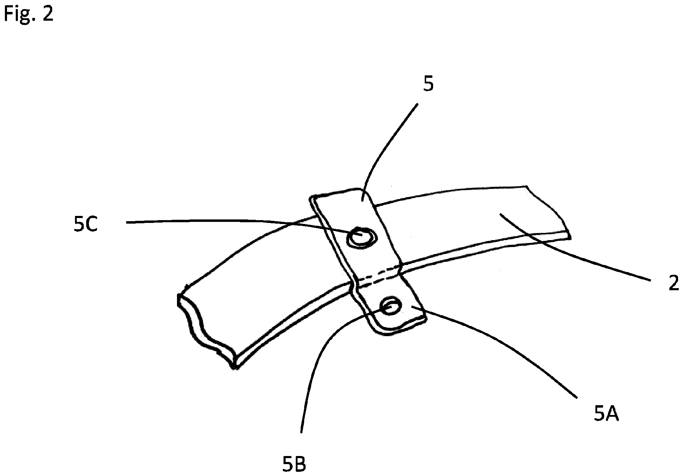

In der Fig. 2 ist eine mögliche Anordnung der Zunge 5 an dem Schellenband 2 in einer Draufsicht erkennbar. Die Zunge 5 ist hier aus einem relativ dünnen Metallblech ausgebildet und mittels einer Durchsetzfügung 5C, auch als "Toxverbindung" bekannt, an dem Schellenband 2 befestigt. Die Zunge 5 weist an ihrem von dem Schellenband 2 abragenden Ende 5A eine Bohrung 5B auf.

Die Zunge 5 kann auch aus Kunststoff ausgebildet sein. Dann ist auch eine Bohrung nicht zwingend erforderlich.

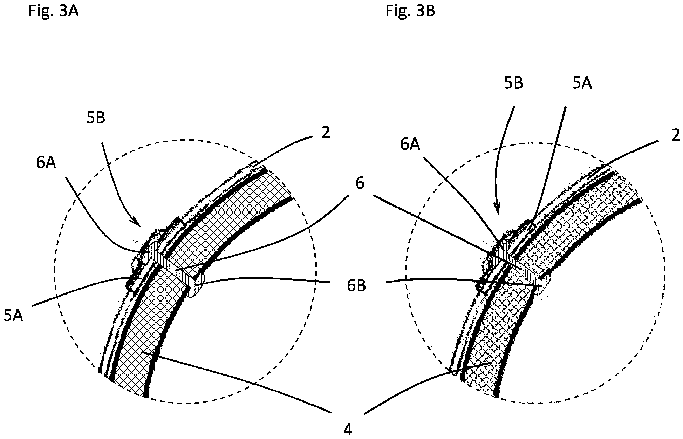

In der Fig. 3A ist in einer Ausschnittvergrößerung der Bereich der Vorrichtung zum Positionieren der Schlauchschelle gezeigt. Ein Befestigungsstift 6 ist durch die Bohrung 5B des Endes 5A der Zunge und durch die Wand des Schlauches 4 hindurch gesteckt. Der Befestigungsstift 6 ist aus einem relativ hochfesten thermoplastischen Kunststoff ausgebildet, der geeignet ist, die Wand des Schlauches 4 zu durchdringen.

Durch einen thermoplastischen Umformvorgang sind die beiden Enden des Befestigungsstiftes 6 zu nietähnlichen Köpfen 6A und 6B umgeformt. Der Befestigungsstift 6 hält auf diese Weise die Zunge 5 und damit auch das Schellenband 2 in einer vorbestimmten Position auf dem Schlauch 4 fest. Die Verbindung ist sehr haltbar, sodass die Schlauchschelle 1 unverlierbar mit dem Schlauch 4 verbunden ist.

Durch Erhöhung der Anpresskraft bei der thermoplastischen Umformung ist es auch möglich, den schlauchseitigen Kopf 6B des Befestigungsstiftes 6 etwas in das Elastomermaterial des Schlauches 4 einzudrücken, sodass der Kopf 6B nicht oder nicht mehr so weit in das Schlauchinnere ragt. Damit ist beim Einstecken beispielsweise eines Schlauchstutzens in das Ende des Schlauches 4 der Kopf 6B nicht im Weg. Dieser Zustand ist in der Fig. 3B dargestellt.

### Bezugszeichenliste

### (Teil der Beschreibung)

- 1: Schlauchschelle
- 2: Schellenband
- 3: Spannvorrichtung
- 4: Schlauch
- 5: Halteelement, Zunge
- 5A: abragendes Ende der Zunge 5
- 5: Bohrung im Ende 5A
- 6: Befestigungsstift
- 6A, 6B: Nietköpfe des Befestigungsstifts 6

## Patentansprüche

1. Schlauchschelle mit einer Vorrichtung zur Positionierung der Schlauchschelle (1) auf einem Schlauch (4), wobei die Schlauchschelle (1) mindestens ein Schellenband (2) aufweist, welches um eine gedachte Längsachse radial beabstandet tangential etwa kreisringförmig herumgewunden ist und eine Spannvorrichtung (3) aufweist, wobei die Vorrichtung ein axial zum Schellenband (2) abragendes flächiges Halteelement (5) aufweist und die Vorrichtung weiter einen Befestigungsstift (6) aufweist, der durch das flächige Halteelement (5) hindurch radial nach innen ragt, wobei der Befestigungsstift (6) durch die Wand eines Schlauches (4) hindurch stechbar ist und wobei an dem Befestigungsstift (6) in radialer Richtung außen von dem Halteelement (5) und innenseitig des Schlauches (4) jeweils ein Nietkopf (6A, 6B) ausbildbar ist, **dadurch gekennzeichnet, dass** das Halteelement (5) an dem Schellenband (2) angeordnet ist und als flache Zunge axial von dem Schellenband (2) abragt.

2. Schlauchschelle Vorrichtung nach Anspruch 1, **dadurch gekennzeichnet, dass** das Halteelement (5) aus einem dünnen Metallblech ausgebildet ist, wobei das Halteelement (5) in seinem vom Schellenband (2) abragenden Teil (5A) eine Bohrung (5B) aufweist.

3. Schlauchschelle nach Anspruch 1, **dadurch gekennzeichnet, dass** das Halteelement (5) aus einem Kunststoff ausgebildet ist.

4. Schlauchschelle nach mindestens einem der vorstehenden Ansprüche, **dadurch gekennzeichnet, dass** der Befestigungsstift (6) aus einem weichen Metall ausgebildet ist.

5. Schlauchschelle nach Anspruch 4, **dadurch gekennzeichnet, dass** der Befestigungsstift (6) aus Aluminium ausgebildet ist.

6. Schlauchschelle nach mindestens einem der Ansprüche 1 - 3, **dadurch gekennzeichnet, dass** der Befestigungsstift (6) aus einem thermoplastischen Kunststoff ausgebildet ist.

7. Schlauchschelle nach mindestens einem der vorstehenden Ansprüche, **dadurch gekennzeichnet, dass** der Befestigungsstift bereits vor dem Durchstechen der Schlauchwand in radialer Richtung außen einen Nietkopf (6A) aufweist.

## Claims

1. Hose clip having an apparatus for positioning the hose clip (1) on a hose (4), wherein the hose clip (1) comprises at least one clip band (2) which is wound around an imaginary longitudinal axis at a radial spacing tangentially approximately in a circular ring shape and which comprises a clamping apparatus (3), wherein the apparatus comprises an areal retaining element (5) which projects axially with respect to the clip band (2) and the apparatus further comprises a fastening pin (6) which projects radially inwards through the areal retaining element (5), wherein the fastening pin (6) can pierce through the wall of a hose (4) and wherein a respective rivet head (6A, 6B) can be formed on the fastening pin (6) in a radially outward direction from the retaining element (5) and on the inner side of the hose (4), **characterized in that** the retaining element (5) is arranged on the clip band (2) and projects in the form of a flat tongue axially from the clip band (2).

2. Hose clip according to Claim 1, **characterized in that** the retaining element (5) is formed from a thin metal sheet, wherein the retaining element (5) comprises a bore (5B) in its part (5A) projecting from the clip band (2).

3. Hose clip according to Claim 1, **characterized in that** the retaining element (5) is formed from a plastic.

4. Hose clip according to at least one of the preceding claims, **characterized in that** the fastening pin (6) is formed from a soft metal.

5. Hose clip according to Claim 4, **characterized in that** the fastening pin (6) is formed from aluminium.

6. Hose clip according to at least one of Claims 1-3, **characterized in that** the fastening pin (6) is formed from a thermoplastic.

7. Hose clip according to at least one of the preceding claims, **characterized in that** the fastening pin already comprises a rivet head (6A) in the radially outward direction prior to the piercing of the hose wall.

## Revendications

1. Collier de serrage avec un dispositif pour positionner le collier de serrage (1) sur un tuyau (4),
le collier de serrage (1) présentant au moins une bande de collier (2) qui est enroulée autour d'un axe longitudinal imaginaire à distance radiale tangentiellement approximativement en forme d'anneau de cercle et présente un dispositif de serrage (3), le dispositif présentant un élément de retenue plat (5) dépassant axialement de la bande de collier (2) et le dispositif présentant en outre une tige de fixation (6), qui fait saillie radialement vers l'intérieur à travers l'élément de retenue plat (5), la tige de fixation (6) pouvant être enfoncée à travers la paroi d'un tuyau (4) et une tête de rivet (6A, 6B) pouvant être formée respectivement sur la tige de fixation (6) dans la direction radiale à l'extérieur de l'élément de retenue (5) et sur le côté intérieur du tuyau (4), **caractérisé en ce que** l'élément de retenue (5) est agencé sur la bande de collier (2) et fait saillie axialement de la bande de collier (2) sous la forme d'une languette plate.

2. Collier de serrage selon la revendication 1, **caractérisé en ce que** l'élément de retenue (5) est formé d'une tôle métallique mince, l'élément de retenue (5) présentant un alésage (5B) dans sa partie (5A) dépassant de la bande de collier (2).

3. Collier de serrage selon la revendication 1, **caractérisé en ce que** l'élément de retenue (5) est formé d'une matière plastique.

4. Collier de serrage selon au moins l'une quelconque des revendications précédentes, **caractérisé en ce que** la tige de fixation (6) est réalisée en un métal mou.

5. Collier de serrage selon la revendication 4, **caractérisé en ce que** la tige de fixation (6) est réalisée en aluminium.

6. Collier de serrage selon au moins l'une quelconque des revendications 1 à 3, **caractérisé en ce que** la tige de fixation (6) est réalisée en une matière thermoplastique.

7. Collier de serrage selon au moins l'une quelconque des revendications précédentes, **caractérisé en ce que** la tige de fixation présente une tête de rivet (6A) avant même le perçage de la paroi du tuyau dans la direction radiale vers l'extérieur.
